(19) Europäisches Patentamt
European Patent Office
Office européen des brevets

(11) EP 4 768 543 A1

(12) EUROPEAN PATENT APPLICATION
published in accordance with Art. 153(4) EPC

(43) Date of publication:
**01.07.2026 Bulletin 2026/27**

(21) Application number: **24856457.7**

(22) Date of filing: **20.08.2024**

(51) International Patent Classification (IPC):
***C08L 69/00*** (2006.01) ***C08K 5/13*** (2006.01)
***C08K 5/523*** (2006.01) ***C08K 5/526*** (2006.01)
***C08K 7/04*** (2006.01)

(52) Cooperative Patent Classification (CPC):
**C08K 5/13; C08K 5/523; C08K 5/526; C08K 7/04; C08L 69/00**

(86) International application number:
**PCT/JP2024/029511**

(87) International publication number:
**WO 2025/041769 (27.02.2025 Gazette 2025/09)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority:
**24.08.2023 JP 2023136399**
**24.08.2023 JP 2023136400**
**19.08.2024 JP 2024137756**
**19.08.2024 JP 2024137757**

(71) Applicant: **Mitsubishi Engineering-Plastics Corporation**
**Tokyo 105-0021 (JP)**

(72) Inventors:
- **HAYAKAWA, Junya**
  **Hiratsuka-shi, Kanagawa 254-0016 (JP)**
- **SUZUKI, Noriyasu**
  **Hiratsuka-shi, Kanagawa 254-0016 (JP)**
- **KAWABE, Kiyoto**
  **Hiratsuka-shi, Kanagawa 254-0016 (JP)**

(74) Representative: **Müller-Boré & Partner Patentanwälte PartG mbB**
**Friedenheimer Brücke 21**
**80639 München (DE)**

# (54) POLYCARBONATE RESIN COMPOSITION

(57) A polycarbonate resin composition comprising a polycarbonate resin (A) and, relative to 100 parts by mass of the polycarbonate resin (A), 0.0001 to 0.3 parts by mass of triaryl phosphate (B) represented by the following general formula (1), 1 to 100 parts by mass of a fibrous filler (C), and the following amount of at least one of the following (i) to (iv):
(i) 0.0005 to 0.1 parts by mass of 2-4-di-tert-butylphenol,
(ii) 0.0001 to 0.03 parts by mass of 2,2-bis(4-hydroxyphenyl) propane,
(iii) 0.0005 to 0.05 parts by mass of 4-tert-butylphenol, and
(iv) 0.001 to 0.05 parts by mass of cumylphenol.

[C1]

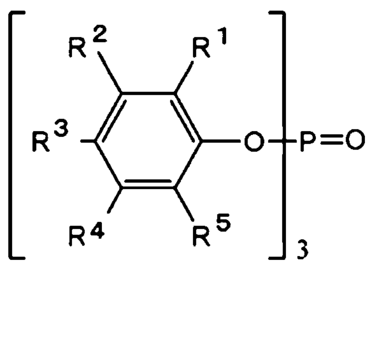

(1)

EP 4 768 543 A1

## Description

[Technical Field]

The present invention relates to a polycarbonate resin composition, and in detail, relates to a polycarbonate resin composition having excellent bending strength and impact resistance and a molded article thereof.

[Background Art]

A polycarbonate resin has excellent mechanical characteristics such as impact resistance and is also excellent in terms of heat resistance, transparency, and the like and is thus in use in many applications such as a variety of optical parts, electrical and electronic equipment parts, automotive interior and exterior parts, OA equipment parts, seats, mechanical parts, and building materials.

As a method for improving the heat resistance of the polycarbonate resin, there is a method of adding a stabilizer. A stabilizer which is often used in a polycarbonate resin is an aromatic phosphite stabilizer, and one typical stabilizer thereof is tris(2,4-di-tert-butylphenyl) phosphite.

There have been many proposals of a polycarbonate resin composition in which this stabilizer is used, and for example, in PTL 1, a method in which tris(nonylphenyl) phosphite is jointly used with tris(2,4-di-butylphenyl) phosphite has been proposed.

However, tris(2,4-di-tert-butylphenyl) phosphite certainly has an effect of preventing discoloration and deterioration of a polycarbonate resin, but has a problem of a decrease in mechanical strength.

[Citation List]

[Patent Literature]

PTL 1: JP H10-60247 A

[Summary of Invention]

[Technical Problem]

Sometimes a filler is compounded in order to improve the mechanical properties of the polycarbonate resin. An object of the present invention is to provide a filler-containing reinforced polycarbonate resin composition having improved mechanical properties and being excellent in terms of bending strength and impact resistance.

[Solution to Problem]

As a result of repeating intensive studies in order to achieve the above-described object, the present inventors found that a polycarbonate resin composition containing a specific triaryl phosphate compound, a specific compound having a phenolic structure, and a fibrous filler in specific amounts, respectively, has improved mechanical properties and is excellent in terms of bending strength and impact resistance, and reached the present invention.

The present invention relates to the following polycarbonate resin compositions and molded articles.

1. A polycarbonate resin composition comprising a polycarbonate resin (A) and, relative to 100 parts by mass of the polycarbonate resin (A), 0.0001 to 0.3 parts by mass of triaryl phosphate (B) represented by the following general formula (1), 1 to 100 parts by mass of a fibrous filler (C), and the following amount of at least one of the following (i) to (iv):

    (i) 0.0005 to 0.1 parts by mass of 2-4-di-tert-butylphenol,
    (ii) 0.0001 to 0.03 parts by mass of 2,2-bis(4-hydroxyphenyl)propane,
    (iii) 0.0005 to 0.05 parts by mass of 4-tert-butylphenol, and
    (iv) 0.001 to 0.05 parts by mass of cumylphenol,

[C1]

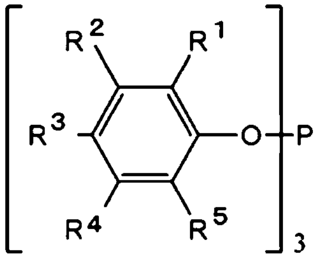

(1)

[in Formula (1), $R^1$ to $R^5$ are each independently a hydrogen atom or an alkyl group having 1 to 12 carbon atoms].

2. The polycarbonate resin composition of 1 above, wherein the fibrous filler (C) is a glass fiber, a carbon fiber, or a mixture thereof.

3. The polycarbonate resin composition of 2 above, wherein the glass fiber is at least one selected from the group consisting of a milled fiber, a chopped strand, and a flat glass fiber.

4. The polycarbonate resin composition of any one of 1 to 3 above, wherein in Formula (1), at least one of $R^1$ to $R^5$ is an alkyl group having 1 to 12 carbon atoms.

5. The polycarbonate resin composition of any one of 1 to 4 above, wherein in Formula (1), $R^1$ and $R^3$ are alkyl groups having 1 to 12 carbon atoms, and $R^2$, $R^4$, and $R^5$ are hydrogen atoms.

6. The polycarbonate resin composition of any one of 1 to 5 above, wherein in Formula (1), $R^1$ and $R^3$ are tert-butyl groups, and $R^2$, $R^4$, and $R^5$ are hydrogen atoms.

7. The polycarbonate resin composition of any one of 1 to 6 above, further comprising 0.001 to 0.3 parts by mass of tris(2,4-di-tert-butylphenyl) phosphite relative to 100 parts by mass of the polycarbonate resin (A).

8. The polycarbonate resin composition of any one of 1 to 7 above, wherein the polycarbonate resin (A) contains a recycled polycarbonate resin.

9. A pellet, comprising the polycarbonate resin composition of any one of 1 to 8 above.

10. The pellet of 9 above, wherein an average length of a long side of the fibrous filler (C) in the pellet is 50 $\mu$m or more, and a ratio of the average length of the long side to an average length of a short side is 5 or more.

11. A molded article, comprising the polycarbonate resin composition of any one of 1 to 8 above.

12. A molded article obtained by molding the pellet of 9 or 10 above.

[Advantageous Effects of Invention]

The polycarbonate resin composition of the present invention has favorable mechanical properties and is excellent in terms of particularly bending strength and impact resistance.

[Brief Description of Drawings]

[Fig. 1]
Fig. 1(a) is a conceptual view of one example of a glass fiber having a flat cross-sectional shape that is compounded with a polycarbonate resin, and Fig. 1(b) is a conceptual view of one example of a glass fiber having a flat cross-sectional shape in a pellet.

[Description of Embodiments]

The present invention will be described in detail below with reference to embodiments, examples, and the like.

In the present specification, "to" is used to mean that numerical values shown before and after "to" are included as the lower limit value and the upper limit value unless particularly otherwise described.

A polycarbonate resin composition of the present invention is a polycarbonate resin composition containing a polycarbonate resin (A), and relative to 100 parts by mass of the polycarbonate resin (A), 0.0001 to 0.3 parts by mass of triaryl phosphate (B) represented by the following general formula (1), 1 to 100 parts by mass of a fibrous filler (C), and the following amount of at least one of the following (i) to (iv):

(i) 0.0005 to 0.1 parts by mass of 2-4-di-tert-butylphenol,
(ii) 0.0001 to 0.03 parts by mass of 2,2-bis(4-hydroxyphenyl)propane,

(iii) 0.0005 to 0.05 parts by mass of 4-tert-butylphenol, and
(iv) 0.001 to 0.05 parts by mass of cumylphenol.

[Polycarbonate resin (A)]

The polycarbonate resin (A) that is used in the present invention is not particularly limited, and a variety of polycarbonate resin can be used. The polycarbonate resin can be classified into aromatic polycarbonate resin in which carbon directly bonding to a carbonic acid bond is each aromatic carbon and aliphatic polycarbonate resin in which the carbon is each aliphatic carbon, and any of them can be used. Among them, the polycarbonate resin (A) is preferably an aromatic polycarbonate resin from the viewpoint of heat resistance, mechanical properties, electrical characteristics, and the like.

Among monomers that serve as a raw material of the aromatic polycarbonate resin, examples of aromatic dihydroxy compounds include

dihydroxybenzenes such as 1,2-dihydroxybenzene, 1,3-dihydroxybenzene (that is, resorcinol), and 1,4-dihydroxybenzene; dihydroxybiphenyls such as 2,5-dihydroxybiphenyl, 2,2'-dihydroxybiphenyl, and 4,4'-dihydroxybiphenyl; dihydroxynaphthalenes such as 2,2'-dihydroxy-1,1'-binaphthyl, 1,2-dihydroxynaphthalene, 1,3-dihydroxynaphthalene, 2,3-dihydroxynaphthalene, 1,6-dihydroxynaphthalene, 2,6-dihydroxynaphthalene, 1,7-dihydroxynaphthalene, and 2,7-dihydroxynaphthalene;

dihydroxydiaryl ethers such as 2,2'-dihydroxydiphenyl ether, 3,3'-dihydroxydiphenyl ether, 4,4'-dihydroxydiphenyl ether, 4,4'-dihydroxy-3,3'-dimethyl diphenyl ether, 1,4-bis(3-hydroxyphenoxy)benzene, and 1,3-bis(4-hydroxyphenoxy)benzene;

bis(hydroxyaryl)alkanes such as 2,2-bis(4-hydroxyphenyl)propane (that is, bisphenol A), 1,1-bis(4-hydroxyphenyl) propane, 2,2-bis(3-methyl-4-hydroxyphenyl)propane (that is, bisphenol C), 2,2-bis(3-methoxy-4-hydroxyphenyl) propane, 2-(4-hydroxyphenyl)-2-(3-methoxy-4-hydroxyphenyl)propane, 1,1-bis(3-tert-butyl-4-hydroxyphenyl)propane, 2,2-bis(3,5-dimethyl-4-hydroxyphenyl)propane, 2,2-bis(3-cyclohexyl-4-hydroxyphenyl)propane, 2-(4-hydroxyphenyl)-2-(3-cyclohexyl-4-hydroxyphenyl)propane, α,α'-bis(4-hydroxyphenyl)-1,4-diisopropylbenzene, 1,3-bis [2-(4-hydroxyphenyl)-2-propyl]benzene, bis(4-hydroxyphenyl)methane, bis(4-hydroxyphenyl)cyclohexylmethane, bis(4-hydroxyphenyl)phenylmethane, bis(4-hydroxyphenyl) (4-propenylphenyl)methane, bis(4-hydroxyphenyl)diphenylmethane, bis(4-hydroxyphenyl)naphthylmethane, 1,1-bis(4-hydroxyphenyl)ethane, 1,1-bis(4-hydroxyphenyl)-1-phenylethane, 1,1-bis(4-hydroxyphenyl)-1-naphthylethane, 1,1-bis(4-hydroxyphenyl)butane, 2,2-bis(4-hydroxyphenyl)butane, 2,2-bis(4-hydroxyphenyl)pentane, 1,1-bis(4-hydroxyphenyl)hexane, 2,2-bis(4-hydroxyphenyl)hexane, 1,1-bis(4-hydroxyphenyl)octane, 2,2-bis(4-hydroxyphenyl)octane, 4,4-bis(4-hydroxyphenyl)heptane, 2,2-bis(4-hydroxyphenyl)nonane, 1,1-bis(4-hydroxyphenyl)decane, 1,1-bis(4-hydroxyphenyl)dodecane; bis(hydroxyaryl)cycloalkanes such as 1,1-bis(4-hydroxyphenyl)cyclopentane, 1,1-bis(4-hydroxyphenyl)cyclohexane, 1,1-bis(4-hydroxyphenyl)-3,3-dimethylcyclohexane, 1,1-bis(4-hydroxyphenyl)-3,4-dimethylcyclohexane, 1,1-bis(4-hydroxyphenyl)-3,5-dimethylcyclohexane, 1,1-bis(4-hydroxyphenyl)-3,3,5-trimethylcyclohexane, 1,1-bis(4-hydroxy-3,5-dimethylphenyl)-3,3,5-trimethylcyclohexane, 1,1-bis(4-hydroxyphenyl)-3-propyl-5-methylcyclohexane, 1,1-bis(4-hydroxyphenyl)-3-tert-butyl-cyclohexane, 1,1-bis(4-hydroxyphenyl)-4-tert-butyl-cyclohexane, 1,1-bis(4-hydroxyphenyl)-3-phenylcyclohexane, and 1,1-bis(4-hydroxyphenyl)-4-phenylcyclohexane;

cardo structure-containing bisphenols such as 9,9-bis(4-hydroxyphenyl)fluorene and 9,9-bis(4-hydroxy-3-methylphenyl)fluorene;

dihydroxydiaryl sulfides such as 4,4'-dihydroxydiphenyl sulfide and 4,4'-dihydroxy-3,3'-dimethyldiphenyl sulfide; dihydroxydiarylsulfoxides such as 4,4'-dihydroxydiphenyl sulfoxide and 4,4'-dihydroxy-3,3'-dimethyldiphenyl sulfoxide; dihydroxydiarylsulfones such as 4,4'-dihydroxydiphenylsulfone and 4,4'-dihydroxy-3,3'-dimethyldiphenylsulfone;

and the like.

Among these, bis(hydroxyaryl)alkanes are preferable, even among them, bis(4-hydroxyphenyl)alkanes are preferable, and particularly, 2,2-bis(4-hydroxyphenyl)propane and 2,2-bis(3-methyl-4-hydroxyphenyl)propane are preferable from the viewpoint of impact resistance and heat resistance.

The aromatic dihydroxy compounds may be used singly or two or more thereof may be jointly used in arbitrary combination and ratio.

Among monomers that serve as a raw material of the polycarbonate resin, as examples of carbonate precursors, carbonyl halides, carbonate esters, and the like are used. The carbonate precursors may be used singly or two or more thereof may be jointly used in arbitrary combination and ratio.

Specific examples of the carbonyl halides include phosgene; haloformates such as a bischloroformate form of a dihydroxy compound and a monochloroformate form of a dihydroxy compound, and the like.

Specific examples of the carbonate esters include diaryl carbonates such as diphenyl carbonate and ditolyl carbonate; dialkyl carbonates such as dimethyl carbonate and diethyl carbonate; bis carbonates of a dihydroxy compound, mono carbonates of a dihydroxy compound, and carbonates of a dihydroxy compound such as cyclic carbonates.

A method for producing the polycarbonate resin (A) is not particularly limited, and an arbitrary method can be employed. Examples thereof include an interfacial polymerization method, a melt transesterification method, a pyridine method, a ring-opening polymerization method of a cyclic carbonate compound, a solid-phase transesterification method of a prepolymer, and the like. Among these, the interfacial polymerization method and the melt transesterification method are preferable from the viewpoint of the polycarbonate resin (A) having an effect of improving moisture and heat resistance, and the interfacial polymerization method is particularly preferable.

Regarding the molecular weight of the polycarbonate resin (A), the viscosity-average molecular weight (Mv) is preferably 10,000 to 50,000, more preferably 10,000 to 40,000, particularly, 10,000 to 30,000 or 10,000 to 26,000, still more preferably 10,500 or more or 11,000 or more, particularly preferably 11,500 or more, and most preferably 12,000 or more and still more preferably 24,000 or less, and particularly preferably 20,000 or less. When the viscosity-average molecular weight is the lower limit value of the above-described range or more, the mechanical strength of the polycarbonate resin composition of the present invention can be improved, and when the viscosity-average molecular weight is the upper limit value of the above-described range or less, the fluidity of the polycarbonate resin composition of the present invention can be improved by curbing a decrease of the fluidity, and it becomes possible to easily perform a molding process by enhancing moldability.

Two or more kinds of polycarbonate resin having differing viscosity-average molecular weights may be mixed and used, and in this case, a polycarbonate resin having a viscosity-average molecular weight outside the above-described preferable range may also be mixed.

The viscosity-average molecular weight (Mv) means a value calculated from Schnell's viscosity equation, that is, $\eta = 1.23 \times 10^{-4} Mv^{0.83}$ after the intrinsic viscosity [η] at a temperature of 25°C (unit: dl/g) is obtained using methylene chloride as a solvent and an Ubbelohde viscometer. In addition, the intrinsic viscosity [η] refers to a value calculated from the following formula after a specific viscosity [$\eta_{sp}$] at each solution concentration [C] (g/dl) is measured.

[Math. 1]

$$\eta = \lim_{c \to 0} \eta_{sp} / \mathrm{c}$$

Furthermore, the polycarbonate resin (A) may be not only a virgin resin but also a polycarbonate resin recycled from a used product (a so-called material-recycled polycarbonate resin) or a polycarbonate resin produced from a polycarbonate resin that has been chemically decomposed and returned to a raw material (a so-called chemically-recycled polycarbonate resin) and also preferably contains both a virgin resin and a recycled resin and may be composed of a recycled polycarbonate resin. The proportion of the recycled polycarbonate resin in the polycarbonate resin (A) is preferably 40% or more, 50% or more, 60% or more, or 80% or more and particularly preferably 100%.

Preferable examples of the used product include a variety of sheet materials, optical recording media such as optical discs (CD and DVD), light guide plates; vehicle transparent members such as automobile window glass, automobile headlamp lenses, and windshields, containers such as water bottles, a variety of cover materials, eyeglass lenses, architectural members such as soundproof walls, glass windows, and corrugated sheets, and the like. In addition, as the recycled polycarbonate resin, non-conforming products during molding, crushed products obtained from sprues or runners, pelletized products obtained by melting the above-described products, and the like are also available.

[Triaryl phosphate (B)]

The polycarbonate resin composition of the present invention contains triaryl phosphate (B) represented by a general formula (1). In the present specification, an aryl group means a group including a monocyclic or polycyclic aromatic group and particularly preferably means a phenyl group.

[C2]

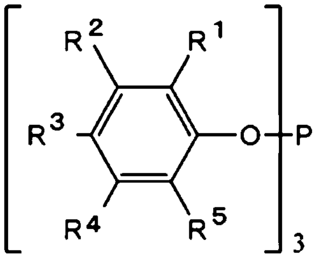

(1)

In Formula (1), $R^1$ to $R^5$ are each independently a hydrogen atom or an alkyl group having 1 to 12 carbon atoms, the alkyl group having 1 to 12 carbon atoms is preferably an alkyl group having 1 to 8 carbon atoms, and preferable examples thereof include a methyl group, an ethyl group, a propyl group, an n-butyl group, a tert-butyl group, a pentyl group, a hexyl group, a heptyl group, or an octyl group. Among these, an alkyl group having 1 to 6 carbon atoms, particularly, an alkyl group having 1 to 4 carbon atoms is preferable.

In Formula (1), when two or more of $R^1$ to $R^5$ on each of the three aromatic rings are alkyl groups, the alkyl groups may be the same or different from one another.

In triaryl phosphate (B), at least one or more of $R^1$ to $R^5$ on each aromatic ring in Formula (1) is preferably an alkyl group having 1 to 12 carbon atoms.

Furthermore, $R^1$ and $R^3$ on each aromatic ring are alkyl groups having 1 to 12 carbon atoms, and $R^2$, $R^4$, and $R^5$ on each aromatic ring are more preferably hydrogen atoms.

Specific examples of triaryl phosphate (B) include triphenyl phosphate, tricresyl phosphate, trixylenyl phosphate, cresyl diphenyl phosphate, cresyl-2,6-dixylenyl phosphate, dicresylphenyl phosphate, ethylphenyldiphenyl phosphate, diethylphenylphenyl phosphate, propylphenyldiphenyl phosphate, dipropylphenylphenyl phosphate, tripropylphenyl phosphate, butylphenyldiphenyl phosphate, dibutylphenylphenyl phosphate, tributylphenyl phosphate, and the like.

Among these, triaryl phosphate (B) is preferably the triaryl phosphate for which in Formula (1), $R^1$ and $R^3$ on each aromatic ring are tert-butyl groups and $R^2$, $R^4$, and $R^5$ on each aromatic ring are hydrogen atoms and particularly preferably tris(2,4-di-tert-butylphenyl) phosphate.

Triaryl phosphate (B) may be used singly or two or more thereof may be jointly used.

The content of triaryl phosphate (B) is 0.0001 to 0.3 parts by mass relative to 100 parts by mass of the polycarbonate resin (A). The resin composition containing triaryl phosphate in such an amount is also excellent in terms of bending strength and impact resistance. The content of triaryl phosphate (B) is preferably 0.0005 parts by mass or more, particularly, 0.001 parts by mass or more or 0.003 parts by mass or more, and particularly preferably 0.005 parts by mass or more, and is preferably 0.25 parts by mass or less, particularly, 0.2 parts by mass or less, 0.15 parts by mass or less, 0.13 parts by mass or less, and particularly preferably 0.10 parts by mass or less.

[Fibrous filler (C)]

The polycarbonate resin composition of the present invention contains a fibrous filler (C). When triaryl phosphate (B) and the fibrous filler (C) are combined together, it is possible to improve bending strength and impact resistance.

As the fibrous filler that is used in the present invention, conventionally known arbitrary fibrous fillers can be used. Specific examples thereof include a glass fiber, a carbon fiber, a calcium silicate (wollastonite) fiber, an alumina fiber, a silica-alumina fiber, a potassium titanate fiber, a ceramic fiber, and the like. Among these, at least one selected from the group consisting of a glass fiber, a carbon fiber, a wollastonite fiber, an alumina fiber, and a silica-alumina fiber is preferable. Among these, a glass fiber, a carbon fiber, and a mixture thereof are preferable.

As the glass fiber, not only a glass fiber having a general perfectly circular cross-sectional shape but also glass fibers having a variety of irregular cross-sectional shapes may be used. Such glass fibers have an average fiber diameter of preferably 1 to 25 $\mu$m and more preferably 5 to 17 $\mu$m. When a glass fiber having an average fiber diameter of less than 1 $\mu$m is used, there is a concern that the moldability may be impaired, and when a glass fiber having an average fiber diameter of more than 25 $\mu$m is used, there is a concern that the external appearance may be impaired or a reinforcing effect may be insufficient. In addition, as the glass fiber, a continuously wound glass roving, a chopped strand having a trimmed length (cut length) of 1 to 10 mm, a milled fiber crushed to an average fiber length of about 10 to 500 $\mu$m, a glass fiber having a flat shape in a cross section orthogonal to the length (2 in Fig. 1) direction of the glass fiber (also referred to as a flat glass fiber), or an elliptical glass fiber can be used, and these can also be jointly used.

In the glass fiber having a flat cross-sectional shape, the length (1 in Fig. 1) of a short side is defined as the fiber diameter (referred to as the long diameter in some cases), and in the glass fiber having an elliptical cross-sectional shape,

the length of the long axis of the ellipse is defined as the fiber diameter.

When the glass fiber is used, the impact resistance becomes more favorable, which is preferable.

As the carbon fiber, there are a variety of types (flame-resistant, carbonaceous, graphitic, and the like) of carbon fibers generally produced by firing an acrylic fiber, petroleum, carbon special pitch, a cellulose fiber, lignin, or the like as a raw material, and the base material does not matter. Such a carbon fiber has an average fiber diameter of preferably 1 to 20 μm and more preferably 3 to 15 μm. When a carbon fiber having an average fiber diameter of less than 1 μm is used, there is a concern that the moldability may be impaired, and when a carbon fiber having an average fiber diameter of more than 20 μm is used, there is a concern that the appearance may be impaired and the reinforcing effect may be insufficient.

When the carbon fiber is used, the tensile strength becomes more favorable, which is preferable.

The average fiber diameter and average fiber length of the fibrous filler (C) can be obtained by, for example, randomly selecting 50 fibers of fibrous filler from 10 g of the fibrous filler, measuring the fiber diameter and length of each of the fibrous filler fibers by microscopic observation, and obtaining the averages of the measurement results.

In addition, the average fiber diameter and average fiber length of the fibrous filler (C) mentioned herein refer to the average fiber diameter and average fiber length of the fibrous filler (C) that is compounded with the polycarbonate resin (A) to produce a polycarbonate resin composition pellet and do not refer to the average length of the long sides and the average length of the short sides of the fibrous filler (C) in an obtained pellet to be described below.

The fibrous filler (C) may be subjected to a surface treatment in which the surface of the fibrous filler is coated with a fatty acid such as stearic acid or oleic acid, paraffin, wax, an organic silane, an organic titanate, an epoxy resin, a urethane resin, or the like as necessary.

The content of the fibrous filler (C) is 1 to 100 parts by mass relative to 100 parts by mass of the polycarbonate resin (A). When the content of the fibrous filler (C) is less than 1 part by mass, an impact resistance or elastic modulus improvement effect is insufficient, and when the content exceeds 100 parts by mass, the appearance of a polycarbonate resin molded article may deteriorate. The content is preferably 3 parts by mass or more and more preferably 5 parts by mass or more and is preferably 90 parts by mass or less and particularly preferably 80 parts by mass or less.

[Polycarbonate oligomer]

The polycarbonate resin composition of the present invention may contain a polycarbonate oligomer in order to improve the appearance or fluidity of a molded article. The polycarbonate oligomer is, for example, a carbonate oligomer having a viscosity-average molecular weight (Mv) of less than 10,000. The viscosity-average molecular weight (Mv) of the polycarbonate oligomer is measured by the same method as for the viscosity-average molecular weight (Mv) of the polycarbonate resin.

The viscosity-average molecular weight (Mv) of the polycarbonate oligomer is usually 1,500 or more, preferably 2,000 or more, and more preferably 3,000 or more, and is usually 9,500 or less, preferably 9,000 or less, and more preferably 8,000 or less. Furthermore, the content of the polycarbonate oligomer is preferably set to 30 mass% or less of the polycarbonate resin.

The polycarbonate oligomer is not particularly limited as long as the polycarbonate oligomer includes a -[O-R-OC(=O)]- unit having a carbonic acid ester bond in the molecular main chain (R contains an organic group, preferably a hydrocarbon group, and more preferably an aliphatic group, an aromatic group, or both an aliphatic group and an aromatic group and further has a linear or branched structure). In the present embodiment, the polycarbonate oligomer is preferably an aromatic polycarbonate oligomer and more preferably a polycarbonate oligomer having a bisphenol skeleton.

When the polycarbonate oligomer is compounded, the affinity between the polycarbonate resin (A) and the glass fiber tends to improve.

[Compounds having phenolic structure]

The polycarbonate resin composition of the present invention contains the following amount of at least one of the following compounds (i) to (iv) having a phenolic structure:

(i) 0.0005 to 0.1 parts by mass of 2-4-di-tert-butylphenol,
(ii) 0.0001 to 0.03 parts by mass of 2,2-bis(4-hydroxyphenyl)propane,
(iii) 0.0005 to 0.05 parts by mass of 4-tert-butylphenol, and
(iv) 0.001 to 0.05 parts by mass of cumylphenol.

When the specific amount of at least one of the compounds having a phenolic structure is contained together with triaryl phosphate (B), it is possible to further improve the bending strength and impact resistance of the polycarbonate resin composition.

Among the above-described compounds, the polycarbonate resin composition preferably contains at least any of

(i) 0.0005 to 0.1 parts by mass of 2-4-di-tert-butylphenol, (ii) 0.0001 to 0.03 parts by mass of 2,2-bis(4-hydroxyphenyl) propane, or (iii) 0.0005 to 0.05 parts by mass of 4-tert-butylphenol. When the polycarbonate resin composition contains these together with triaryl phosphate (B), it is possible to make the bending strength and impact resistance of the polycarbonate resin composition superior.

The content of the 2,4-di-tert-butylphenol is, relative to 100 parts by mass of the polycarbonate resin (A), preferably 0.001 parts by mass or more, more preferably 0.003 parts by mass or more, and particularly preferably 0.005 parts by mass or more and is preferably 0.08 parts by mass or less, more preferably 0.07 parts by mass or less, still more preferably 0.06 parts by mass or less, and particularly preferably 0.05 parts by mass or less.

The content of the 2,2-bis(4-hydroxyphenyl)propane is, relative to 100 parts by mass of the polycarbonate resin (A), preferably 0.002 parts by mass or more, more preferably 0.003 parts by mass or more, and still more preferably 0.004 parts by mass or more and is preferably 0.02 parts by mass or less.

The content of the 4-tert-butylphenol is, relative to 100 parts by mass of the polycarbonate resin (A), preferably 0.0010 parts by mass or more, more preferably 0.0012 parts by mass or more, and still more preferably 0.0015 parts by mass or more and is preferably 0.0035 parts by mass or less.

The content of cumylphenol (that is, 2-(4-hydroxyphenyl)-2-phenylpropane or 4-α-cumylphenol) is, relative to 100 parts by mass of the polycarbonate resin (A), preferably 0.0012 parts by mass or more and more preferably 0.0015 parts by mass or more and is preferably 0.01 parts by mass or less, more preferably 0.005 parts by mass or less, and particularly preferably 0.0035 parts by mass or less.

[Tris(2,4-di-tert-butylphenyl) phosphite]

The polycarbonate resin composition of the present invention preferably further contains 0.001 to 0.3 parts by mass of tris(2,4-di-tert-butylphenyl) phosphite relative to 100 parts by mass of the polycarbonate resin (A). When the polycarbonate resin composition contains such an amount of tris(2,4-di-tert-butylphenyl) phosphite together with triaryl phosphate (B) and the compound having a phenolic structure, it is possible to further improve bending strength and impact resistance.

The content of tris(2,4-di-tert-butylphenyl) phosphite is more preferably 0.002 parts by mass or more, particularly, 0.003 parts by mass or more or 0.004 parts by mass or more and particularly preferably 0.005 parts by mass or more and is more preferably 0.25 parts by mass or less, particularly, 0.2 parts by mass or less, 0.15 parts by mass or less, or 0.13 parts by mass or less and particularly preferably 0.10 parts by mass or less.

[Arylphosphine and arylphosphine oxide]

The polycarbonate resin composition of the present invention preferably also contains an arylphosphine or an arylphosphine oxide.

Preferable examples of the arylphosphine include triphenylphosphine, diphenylbutylphosphine, diphenyloctadecylphosphine, tris(p-tolyl)phosphine, tris(p-nonylphenyl) phosphine, tris(naphthyl)phosphine, diphenyl(hydroxymethyl)phosphine, diphenyl(acetoxymethyl), diphenyl(β-ethylcarboxyethyl)phosphine, tris(p-chlorophenyl) phosphine, tris(p-fluorophenyl)phosphine, diphenylbenzylphosphine, diphenyl-β-cyanoethylphosphine, diphenyl(p-hydroxyphenyl) phosphine, diphenyl-1,4-dihydroxyphenyl-2-phosphine, phenylnaphthylbenzylphosphine, and the like, triarylphosphine is preferable, preferable examples thereof include triphenylphosphine, tri-o-tolylphosphine, and the like, and triphenylphosphine is particularly preferable.

The content of the arylphosphine when contained is preferably 0.001 to 0.3 parts by mass relative to 100 parts by mass of the polycarbonate resin (A). The resin composition containing such an amount of the arylphosphine together with triaryl phosphate (B) is superior in terms of bending strength, tensile strength, and impact resistance. The content of the arylphosphine is more preferably 0.005 parts by mass or more, particularly, 0.008 parts by mass or more, and particularly preferably 0.01 parts by mass or more and is more preferably 0.25 parts by mass or less, particularly, 0.2 parts by mass or less, 0.15 parts by mass or less, 0.1 parts by mass or less, or 0.05 parts by mass or less, and particularly preferably 0.04 parts by mass or less.

Preferable examples of the arylphosphine oxide include triphenylphosphine oxide, diphenylbutylphosphine oxide, diphenyloctadecylphosphine oxide, tris(p-tolyl)phosphine oxide, tris(p-nonylphenyl)phosphine oxide, tris(naphthyl)phosphine oxide, diphenyl(hydroxymethyl)phosphine oxide, diphenyl(acetoxymethyl)phosphine oxide, diphenyl(β-ethylcarboxyethyl)phosphine oxide, tris(p-chlorophenyl)phosphine oxide, tris(p-fluorophenyl)phosphine oxide, diphenylbenzylphosphine oxide, diphenyl-β-cyanoethylphosphine oxide, diphenyl(p-hydroxyphenyl)phosphine oxide, diphenyl-1,4-dihydroxyphenyl-2-phosphine oxide, phenylnaphthylbenzylphosphine oxide, and the like, triarylphosphine oxide is preferable, and triphenylphosphine oxide is particularly preferable.

The content of the arylphosphine oxide when contained is preferably 0.001 to 0.3 parts by mass relative to 100 parts by mass of the polycarbonate resin (A). The resin composition containing such an amount of the arylphosphine oxide

together with triaryl phosphate (B) and, furthermore, each of the above-described components is capable of further improving bending strength, tensile strength, and impact resistance. The content of the arylphosphine oxide is more preferably 0.002 parts by mass or more, particularly, 0.003 parts by mass or more or 0.004 parts by mass or more, and particularly preferably 0.005 parts by mass or more and is more preferably 0.25 parts by mass or less, particularly, 0.2 parts by mass or less, 0.15 parts by mass or less, or 0.13 parts by mass or less, and particularly preferably 0.10 parts by mass or less.

[Styrenic resin]

The polycarbonate resin composition of the present invention preferably also contains a styrenic resin.

The styrenic resin is preferably an aromatic vinyl monomer (b1) alone or a resin obtained by polymerizing the aromatic vinyl monomer (b1) and one or more selected from other vinyl monomers (b2 and b4) and a rubber polymer (b3) that are copolymerizable as necessary.

Examples of the aromatic vinyl monomer (b1) that is used as the styrenic resin include styrene and styrene derivatives such as α-methylstyrene, o-methylstyrene, p-methylstyrene, vinylxylene, ethylstyrene, dimethylstyrene, p-tert-butylstyrene, vinylnaphthalene, methoxystyrene, monobromostyrene, dibromostyrene, fluorostyrene, and tribromostyrene, and styrene is particularly preferable.

These may be used singly or two or more thereof may be mixed together and used.

As the other vinyl monomers that can be copolymerized with these aromatic vinyl monomers (b1), a vinyl cyanide monomer (b2) is preferable, and examples thereof include acrylonitrile, methacrylonitrile, and the like.

In addition, examples of the copolymerizable other monomer (b4) other than the vinyl cyanide monomer (b2) include aryl esters of acrylic acid such as phenyl acrylate and benzyl acrylate; alkyl esters of acrylic acid such as methyl acrylate, ethyl acrylate, propyl acrylate, butyl acrylate, amyl acrylate, hexyl acrylate, 2-ethylhexyl acrylate, octyl acrylate, cyclohexyl acrylate, and dodecyl acrylate; methacrylic acid aryl esters such as phenyl methacrylate and benzyl methacrylate; methacrylic acid alkyl esters such as methyl methacrylate, ethyl methacrylate, propyl methacrylate, butyl methacrylate, amyl methacrylate, hexyl methacrylate, 2-ethylhexyl methacrylate, octyl methacrylate, cyclohexyl methacrylate, and dodecyl methacrylate; epoxy group-containing methacrylic acid esters such as glycidyl methacrylate; maleimide monomers such as maleimide, N-methylmaleimide, and N-phenylmaleimide; α,β-unsaturated carboxylic acids such as acrylic acid, methacrylic acid, maleic acid, maleic anhydride, phthalic acid, and itaconic acid and anhydrides thereof. Acrylic acid alkyl esters and methacrylic acid alkyl esters are preferable.

These other monomers (b4) may be used singly or two or more thereof may be mixed together and used.

In addition, as the rubber polymer (b3) that can be copolymerized with the aromatic vinyl monomer (b1), a rubber having a glass transition temperature of 10°C or lower is preferable. Specific examples of such a rubber polymer include diene rubber, acrylic rubber, ethylene/propylene rubber, silicon rubber, composite rubber (IPN type rubber) having a structure in which a polyorganosiloxane rubber component and a polyalkyl (meth)acrylate rubber component are entangled with each other so that both components cannot be separated from each other, and preferable examples thereof include diene rubber, acrylic rubber, and the like.

In the present specification, "(meth)acrylate" refers to one or both of "acrylate" and "methacrylate", which will also be true for "(meth)acrylic" and "(meth)acryloyl".

Examples of the diene rubber include polybutadiene, styrene-butadiene random copolymers and block copolymers, acrylonitrile-butadiene copolymers, polyisoprene, butadiene-isoprene copolymer, copolymers of ethylene, propylene, and a nonconjugated diene such as ethylene-propylene-hexadiene copolymers, lower alkyl ester copolymers of butadiene-(meth)acrylic acid, lower alkyl ester copolymers of butadiene-styrene-(meth)acrylic acid, and the like.

Examples of the lower alkyl esters of (meth)acrylic acid include methyl acrylate, ethyl acrylate, methyl methacrylate, ethyl methacrylate, and the like.

The proportion of the lower alkyl ester of (meth)acrylic acid in the lower alkyl ester copolymer of butadiene-(meth) acrylic acid or the lower alkyl ester copolymer of butadiene-styrene-(meth) acrylic acid is preferably 30 mass% or less of the amount of the rubber polymer.

Examples of the acrylic rubber include acrylic acid alkyl ester rubber, in which an alkyl group preferably has 1 to 8 carbon atoms. Specific examples of the acrylic acid alkyl ester include ethyl acrylate, butyl acrylate, hexyl acrylate, and the like. In the acrylic acid alkyl ester rubber, an ethylenically unsaturated monomer may be arbitrarily used. Specific examples of such a compound include di(meth)acrylate, divinylbenzene, trivinylbenzene, triallyl cyanurate, allyl (meth) acrylate, butadiene, isoprene, and the like. Examples of the acrylic rubber further include core-shell type polymers having a crosslinked diene rubber as a core.

Regarding these rubber polymers (b3) as well, one may be used singly or two or more thereof may be mixed together and used.

The styrenic resin is preferably composed of 50 to 100 mass% of the aromatic vinyl monomer component (b1), 0 to 30 mass% of the vinyl cyanide monomer component (b2), 0 to 30 mass% of the rubber polymer component (b3), and 0 to

30 mass% of other monomer components (b4), more preferably composed of 50 to 80 mass% of the aromatic vinyl monomer component (b1), 10 to 30 mass% of the vinyl cyanide monomer component (b2), 5 to 25 mass% of the rubber polymer component (b3), and 0 to 20 mass% of other monomer component (b4), and still more preferably composed of 55 to 70 mass% of the aromatic vinyl monomer component (b1), 15 to 25 mass% of the vinyl cyanide monomer component (b2), 10 to 25 mass% of the rubber polymer component (b3), and 0 to 5 mass% of other monomer component (b4).

Specific examples of the styrenic resin include, for example, styrene homopolymer, copolymer of styrene and (meth)acrylonitrile, copolymer of styrene and meth(acrylic) acid alkyl ester, copolymer of styrene, (meth)acrylonitrile, and other copolymerizable monomer, graft copolymer obtained by polymerizing styrene in the presence of rubber, graft copolymer obtained by graft-polymerizing styrene and (meth)acrylonitrile in the presence of rubber, and the like.

Furthermore, specific examples thereof include resin such as polystyrene, high impact polystyrene (HIPS), acrylonitrile-styrene copolymer (AS resin), styrene-maleic anhydride copolymer (SMA resin), acrylonitrile-butadiene-styrene copolymer (ABS resin), acrylonitrile-styrene-acrylic rubber copolymer (ASA resin), styrene-butadiene-styrene copolymer (SBS resin), hydrogenated styrene-butadiene-styrene copolymer (hydrogenated SBS), hydrogenated styrene-isoprene-styrene copolymer (SEPS), acrylonitrile-acrylic rubber-styrene copolymer (AAS resin), acrylonitrile-ethylene propylene rubber-styrene copolymer (AES resin), and styrene-IPN type rubber copolymer, or mixtures thereof.

Among these, acrylonitrile-styrene copolymer (AS resin), acrylonitrile-butadiene-styrene copolymer (ABS resin), acrylonitrile-styrene-acrylic rubber copolymer (ASA resin), and acrylonitrile-ethylene propylene rubber-styrene copolymer (AES resin) are preferable, among these, acrylonitrile-butadiene-styrene copolymer (ABS resin) and acrylonitrile-styrene copolymer (AS resin) are preferable, and in particular, acrylonitrile-butadiene-styrene copolymer (ABS resin) are preferable.

When the resin composition contains the styrenic resin, it is possible to improve the fluidity of the resin composition. The content of the styrenic resin when contained is, relative to 100 parts by mass of the polycarbonate resin (A), preferably 5 parts by mass or more and more preferably 10 parts by mass or more and is preferably 40 parts by mass or less and more preferably 30 parts by mass or less.

[Mold-release agent]

The resin composition of the present invention preferably also contains a mold-release agent.

Examples of the mold-release agent include aliphatic carboxylic acids, esters of an aliphatic carboxylic acid and an alcohol, aliphatic hydrocarbon compounds having a number-average molecular weight of 200 to 15,000, polysiloxane silicone oil, and the like.

Examples of the aliphatic carboxylic acids include saturated or unsaturated aliphatic monovalent, divalent or trivalent carboxylic acids. Here, the aliphatic carboxylic acids also include alicyclic carboxylic acids. Among these, the aliphatic carboxylic acids are preferably monovalent or divalent carboxylic acids having 6 to 36 carbon atoms and more preferably aliphatic saturated monovalent carboxylic acids having 6 to 36 carbon atoms. Specific examples of such aliphatic carboxylic acids include palmitic acid, stearic acid, caproic acid, capric acid, lauric acid, arachic acid, behenic acid, lignoceric acid, cerotic acid, melissic acid, tetratriacontanoic acid, montanic acid, adipic acid, azelaic acid, and the like.

As the aliphatic carboxylic acid in the esters of an aliphatic carboxylic acid and an alcohol, for example, the same aliphatic carboxylic acids as the above-described aliphatic carboxylic acids can be used. On the other hand, examples of the alcohol include saturated or unsaturated monovalent or polyvalent alcohols. These alcohols may have a substituent such as a fluorine atom or an aryl group. Among these, monovalent or polyvalent saturated alcohols having 30 or less carbon atoms are preferable, and aliphatic saturated monovalent alcohols or aliphatic saturated polyvalent alcohols having 30 or less carbon atoms are more preferable. Here, the expression "aliphatic" is used as a term also including alicyclic compounds.

Specific examples of such alcohols include octanol, decanol, dodecanol, stearyl alcohol, behenyl alcohol, ethylene glycol, diethylene glycol, glycerin, pentaerythritol, 2,2-dihydroxyperfluoropropanol, neopentylene glycol, ditrimethylolpropane, dipentaerythritol, and the like.

The above-described esters may contain an aliphatic carboxylic acid and/or an alcohol as an impurity. In addition, the esters may be pure substances or may be mixtures of a plurality of compounds. Furthermore, the aliphatic carboxylic acid and the alcohol that bond to each other to constitute one ester may be each used singly or two or more thereof may be jointly used in arbitrary combination and ratio.

Specific examples of the esters of an aliphatic carboxylic acid and an alcohol include beeswax (mixtures mainly containing myricyl palmitate), stearyl stearate, behenyl behenate, stearyl behenate, glycerin monopalmitate, glycerin monostearate, glycerin distearate, glycerin tristearate, pentaerythritol monopalmitate, pentaerythritol monostearate, pentaerythritol distearate, pentaerythritol tristearate, pentaerythritol tetrastearate, and the like.

Examples of an aliphatic hydrocarbon having a number-average molecular weight of 200 to 15,000 include liquid paraffin, paraffin wax, microcrystalline wax, polyethylene wax, Fischer-Tropsch wax, $\alpha$-olefin oligomers having 3 to 12

carbon atoms, and the like. Here, the aliphatic hydrocarbon also includes alicyclic hydrocarbons. In addition, these hydrocarbons may be partially oxidized.

Among these, paraffin wax and polyethylene wax or a partial oxide of polyethylene wax are preferable, and paraffin wax and polyethylene wax are more preferable.

In addition, the aliphatic hydrocarbon preferably has a number-average molecular weight of 5,000 or less.

The aliphatic hydrocarbon may be a single substance, but a mixture of substances having a variety of constituents or molecular weights can also be used as the aliphatic hydrocarbon as long as the main component is within the above-described range.

Examples of the polysiloxane silicone oil include dimethylsilicone oil, methylphenylsilicone oil, diphenylsilicone oil, fluorinated alkyl silicone, and the like.

The above-described mold-release agent may be contained singly or two or more thereof may be contained in arbitrary combination and ratio.

The content of the mold-release agent is, relative to 100 parts by mass of the polycarbonate resin (A), usually 0.001 parts by mass or more and preferably 0.01 parts by mass or more and is usually 2 parts by mass or less, preferably 1 part by mass or less, and more preferably 0.5 parts by mass or less. When the content of the mold-release agent is less than the lower limit value of the range, the effect of the mold-release properties may be insufficient, and when the content of the mold-release agent exceeds the upper limit value of the range, there is a possibility that the hydrolysis resistance may deteriorate and mold contamination during injection molding may occur.

[Additives and the like]

The polycarbonate resin composition of the present invention may contain other additives other than what has been described above, for example, additives such as a fluorescent brightening agent, a pigment (including carbon black), a dye, a flame retardant, an UV absorber, an impact modifier, a plasticizer, and a compatibilizer. These additives may be contained singly or two or more thereof may be contained.

In addition, the polycarbonate resin composition may contain other resin other than the polycarbonate resin (A) and the styrenic resin. Examples of the other resin include thermoplastic polyester resin such as polyethylene terephthalate, polytrimethylene terephthalate, and polybutylene terephthalate; polyolefin resin such as polyethylene resin and polypropylene resin; polyamide resin; polyimide resin; polyetherimide resin; polyurethane resin; polyphenylene ether resin; polyphenylene sulfide resin; polysulfone resin; polymethacrylate resin, and the like. As the other resin, polybutylene terephthalate resin is preferable.

The other resin may not be contained, and the content of the other resin when contained is preferably less than 5 parts by mass relative to 100 parts by mass of the polycarbonate resin (A). In addition, when contained, the other resin may be contained singly or two or more thereof may be contained in arbitrary combination and ratio.

[Method for producing polycarbonate resin composition pellet]

The kneading conditions for producing a pellet of the polycarbonate resin composition of the present invention also vary with the kind and compounding proportion of each component that is used in the polycarbonate resin composition; however, among the components that are compounded with the polycarbonate resin composition, the fibrous filler (C) is preferably melt-kneaded separately from the other components and particularly preferably side-fed when melt-kneaded using an extruder, supplied from a middle portion of the extruder to a melt-kneaded substance obtained by sufficiently melt-kneading the other components such as the polycarbonate resin, and melt-kneaded.

The melt-kneading temperature is not particularly limited, but is usually in a range of 240°C to 320°C.

A strand melt-extruded from the extruder is rapidly cooled in a water tank and cut using a pelletizer, whereby a polycarbonate resin composition pellet of the present invention can be obtained.

[Average length of long side and average length of short side of fibrous filler (C) in pellet]

In the present invention, it is preferable that the average length of the long side (also referred to as the length of the fiber) of the fibrous filler (C) in the polycarbonate resin composition pellet is 50 μm or more and the ratio between the average length of the long side and the average length of the short side (also referred to as the diameter of the fiber) is 5 or more. When the average length of the long side of the fibrous filler (C) in the pellet is 50 μm or more and the ratio between the average length of the long side and the average length of the short side is 5 or more, the impact resistance or bending strength of a molded article to be obtained becomes superior. When the average length of the long side is less than 50 μm or the ratio between the average length of the long side and the average length of the short side is less than 5, there is a concern that the impact resistance or bending strength of the molded article may become insufficient.

The average length of the long side of the fibrous filler (C) in the polycarbonate resin composition pellet is more

preferably 70 μm or more and is preferably 550 μm or less, more preferably 500 μm or less, still more preferably 400 μm or less, and particularly preferably 100 μm or less.

In addition, the ratio between the average length of the long side and the average length of the short side is more preferably 10 or more and is preferably 500 or less, more preferably 300 or less, and particularly preferably 100 or less.

The average length of the long side and the average length of the short side of the fibrous filler (C) in the polycarbonate resin composition pellet can be obtained by, specifically, heating 2 g of the obtained pellet at 600°C for two hours to volatilize off an organic component such as the resin and recover the fibrous filler, dispersing this fibrous filler in methanol, adding a methanol dispersion of the fibrous filler dropwise onto a glass plate, removing the methanol by drying, then, measuring the lengths of the long sides and short sides of 50 fibers of fibrous filler randomly selected by microscopic observation, and obtaining the average values thereof.

A method for molding a molded article from the polycarbonate resin composition pellet is not particularly limited, a conventionally known molding method can be employed, and examples thereof include an injection molding method, an injection compression molding method, an extrusion molding method, a profile extrusion method, a transfer molding method, a hollow molding method, a gas-assisted hollow molding method, a blow molding method, extrusion blow molding, an IMC (in-mold coating molding) molding method, a rotational molding method, a multilayer molding method, a two-color molding method, an insert molding method, a sandwich molding method, a foam molding method, a pressure molding method, and the like. Among these, the injection molding method is particularly preferable.

The shape of the molded article is not particularly limited and can be selected as appropriate depending on the use or purpose of the molded article, and examples thereof include a chassis, a board-like article, a plate-like article, a rod-like article, a sheet-like article, a film-like article, a cylindrical article, an annular article, a circular article, an elliptical article, a polygonal article, a profile molded article, a hollow article, a frame-like article, a box-like article, a panel-like article, and the like.

[Examples]

The following was performed to confirm the effect of the polycarbonate resin composition of the present invention, but the present invention should not be construed as being limited to the following examples.

Each component used will be shown in Table 1 and Table 2 below.

[Table 1]

| | | |
|---|---|---|
| PC resin (A) | A1 | Bisphenol A-type aromatic polycarbonate resin by interfacial polymerization method.<br>"S-3000F" from Mitsubishi Engineering-Plastics Corporation, Mv:22,000<br>2,4-di-tert-butylphenol content: 0.0000wt%<br>Bisphenol A content: 0.0005wt%<br>4-tert butylphenol content: 0.0011wt%<br>Cumylphenol content: 0.0000wt% |
| | A2 | Bisphenol A-type aromatic polycarbonate resin by interfacial polymerization method.<br>"E-2000F" from Mitsubishi Engineering-Plastics Corporation, Mv:28,000<br>2,4-di-tert-butylphenol content: 0.0000wt%<br>Bisphenol A content: 0.0005wt%<br>4-tert butylphenol content: 0.0011wt%<br>Cumylphenol content: 0.0000wt% |
| | A3 | Recycled aromatic polycarbonate resin recovered from the market.<br>"PC-116X" from Ningbo Xuri Hongyu Technology Corporation, Mv:20,000<br>2,4-di-tert-butylphenol content: 0.001wt%<br>Bisphenol A content: 0.0017wt%<br>4-tert butylphenol content: 0.0004wt%<br>Cumylphenol content: 0.0000wt% |
| | A4 | Recycled aromatic polycarbonate resin recovered from the market<br>"PC3011" from Shanghai Ausell Material Technology, Mv:25,000<br>2,4-di-tert-butylphenol content: 0.001wt%<br>Bisphenol A content: 0.0017wt%<br>4-tert butylphenol content: 0.0004wt%<br>Cumylphenol content: 0.0000wt% |

(continued)

| | | |
|---|---|---|
| Triaryl phosphate(B) | B1 | Tris(2,4-di-tert-butylphenyl)phosphate<br>manufactured by Toronto Research Chemicals Co. |

[Table 2]

| | | |
|---|---|---|
| Fibrous filler (C) | C1 | Milled fiber glass fiber<br>average fiber diameter:10μm, cut length:110μm<br>"MF-S-R" from ASAHI FIBER GLASS Co. |
| | C2 | Chopped strand glass fiber<br>average fiber diameter:1.3μm, cut length:3mm<br>"ECS03T-T571" from Nippon Electric Glass Co. |
| | C3 | Flat glass fiber<br>long diameter:28μm, short diameter: 7μm,<br>ratio between long diameter and short diameter:4<br>"CSG 3PA-830S" from Nitto Boseki Co. |
| | C4 | Carbon fiber<br>average fiber diameter:7μm, average length:6mm<br>"TR06U" from Mitsubishi Chemical Corp. |
| | C5 | Chopped strand glass fiber<br>average fiber diameter:13μm, cut length:3mm<br>"T187" from Nippon Electric Glass Co. |
| Other fillers | CX1 | Glass flake<br>"GLASS FLEKA REFG-101" from Nippon Sheet Glass Co. |
| | CX2 | Plate-shaped micro glass flake<br>"MICRO GLASS FLEKA MEG160FYM01" from Nippon Sheet Glass Co. |
| | CX3 | Glass beads<br>"EGB731BPN" from Potters-Ballotini Co. |
| Styrenic resin | D1 | Acrylonitrile-styrene resin<br>"SANREX 290FFDN" fromTechno Polymer Co.<br>Styrene content:76wt% |
| PC oligomer | D2 | Bisphenol A-type polycarbonate oligomer<br>"AL-071" from Mitsubishi Engineering-Plastics Corp. Mv:5,000<br>2,4-di-tert-butylphenol content:0.0000wt%<br>Bisphenol A content:0.0005wt%<br>4-tert butylphenol content:0.0011wt%<br>Cumylphenol content:0.0000wt% |
| Mold-release agent | E1 | Polyethylene wax<br>"LICOWAX PE520" from Clariant Japan Corp.<br>Mn:2,000 (PS equivalent by GPC) |
| CB-MB | F1 | Carbon black master batch<br>"RB948G" from ECCA Co. CB: 60mass%, polystyrene:40mass% |
| Phenolic structure compound | G1 | 2,4-di-tert-butyl phenol |
| | G2 | 2,2-bis(4-hydroxyphenyl)propane |
| | G3 | 4-tert-butylphenol |
| | G4 | Cumylphenol |

(Examples 1 to 38 and Comparative Examples 1 to 27)

Out of the above-described components, components excluding the glass fiber and the carbon fiber were compounded in proportions (parts by mass) shown below in Tables 3 to 11 below and mixed using a tumbler for 20 minutes, the glass fiber and carbon fiber were then side-fed, the components were melt-kneaded at a cylinder temperature of 280°C with a twin-screw extruder having a screw diameter of 25 mm ("TEX-25αIII" manufactured by Japan Steel works, Ltd.), and strands were cut to obtain pellets.

<Average length of long side and average length of short side of fibrous filler (C) in pellet>

Two grams of the obtained pellet was heated at 600°C for two hours to volatilize off the organic component such as the resin and recover the fibrous filler, this fibrous filler was dispersed in methanol, a methanol dispersion of the fibrous filler was added dropwise onto a glass plate, the methanol was dried and removed, the lengths of the long sides and short sides of 50 fibers of fibrous filler randomly selected by microscopic observation were then measured, and the average values thereof were obtained.

<Measurement of bar flow length>

The pellet obtained above was dried at 120°C for 5 hours, a 20 mm-wide and 2 mm-thick bar flow molded article was then injection-molded using an injection molding machine (NEX80III with a mold clamping force of 80 tons) manufactured by Nissei Plastics Industrial Co., Ltd. under conditions of a cylinder set temperature of 300°C, a mold temperature of 100°C, an injection pressure of 150 MPa, an injection time of 5 seconds, and a molding cycle of 40 seconds, and the flow length (unit: mm) was evaluated.

The resin composition pellet obtained above was dried at 120°C for 5 hours, and an ISO multipurpose specimen (4 mm in thickness) was then injection-molded using the injection molding machine (NEX80III) manufactured by Nissei Plastics Industrial Co., Ltd. under conditions of a cylinder set temperature of 300°C, a mold temperature of 110°C, an injection pressure of 100 MPa, an injection time of 2 seconds, and a molding cycle of 50 seconds.

<Measurement of unnotched Charpy impact strength>

The unnotched Charpy impact strength (unit: $kJ/m^2$) was measured according to ISO179-1 and ISO179-2 using the ISO multipurpose specimen obtained by the above-described method.

<Measurement of bending strength and tensile strength>

Using the ISO multipurpose specimen obtained by the above-described method, the ending strength (unit: MPa) was measured according to ISO178, and the tensile strength (unit: MPa) was measured according to ISO standard 527-1 and ISO527-2 at 23°C.

The above evaluation results will be shown in Table 3 to Table 11 below.

[Table 3]

| | | Example | | | | | | | | | | |
|---|---|---|---|---|---|---|---|---|---|---|---|---|
| | | 1 | 2 | 3 | 4 | 5 | 6 | 7 | 8 | 9 | 10 | 11 |
| PC resin (A) | A1 | 84.1 | 84.1 | 84.1 | 84.1 | 84.1 | 84.1 | 84.1 | 84.1 | 84.1 | 84.1 | 41.0 |
| | A2 | 15.9 | 15.9 | 15.9 | 15.9 | 15.9 | 15.9 | 15.9 | 15.9 | 15.9 | 15.9 | 20.9 |
| | A3 | | | | | | | | | | | 38.1 |
| | A4 | | | | | | | | | | | |
| Phosphate (B) | B1 | 0.0248 | 0.0220 | 0.0220 | 0.0230 | 0.0084 | 0.0480 | 0.0248 | 0.0248 | 0.0248 | 0.0248 | 0.0141 |
| Fibrous filler (C) | C1 | 9.91 | 9.91 | 9.91 | 9.91 | 9.91 | 9.91 | 9.91 | 9.91 | 9.91 | 9.91 | 9.91 |
| | C2 | 1.24 | 1.24 | 1.24 | 1.24 | 1.24 | 1.24 | 1.24 | 1.24 | 1.24 | 1.24 | 1.24 |
| | C3 | | | | | | | | | | | |
| | C4 | | | | | | | | | | | |
| | C5 | | | | | | | | | | | |
| Other fillers | CX1 | | | | | | | | | | | |
| | CX2 | | | | | | | | | | | |
| Styrenic resin | D1 | | | | | | | | | | | |
| PC oligomer | D2 | | 12.38 | 12.38 | 12.38 | 12.38 | 12.38 | 12.38 | 12.38 | 12.38 | 12.38 | 12.38 |
| Mold-release agent | E1 | 0.62 | 0.62 | 0.62 | 0.62 | 0.62 | 0.62 | 0.62 | 0.62 | 0.62 | 0.62 | 0.62 |
| CB-MB | F1 | 0.62 | 0.62 | 0.62 | 0.62 | 0.62 | 0.62 | 0.62 | 0.62 | 0.62 | 0.62 | 0.62 |
| Content in resin composition as amount relative to 100 mass parts of PC(A) | | | | | | | | | | | | |
| 2,4-di-tert-butylphenol | G1 | 0.0012 | 0.0000 | 0.0012 | 0.0450 | 0.0120 | 0.0110 | 0.0012 | 0.0010 | 0.0010 | 0.0010 | 0.0015 |
| 2,2-bis(4-hydroxyphenyl)propane | G2 | 0.0004 | 0.0004 | 0.0004 | 0.0004 | 0.0004 | 0.0004 | 0.0004 | 0.0140 | 0.0004 | 0.0004 | 0.0004 |
| 4-tert-butylphenol | G3 | 0.0010 | 0.0010 | 0.0010 | 0.0010 | 0.0010 | 0.0010 | 0.0010 | 0.0010 | 0.0020 | 0.0010 | 0.0010 |
| Cumylphenol | G4 | 0.0000 | 0.0000 | 0.0000 | 0.0000 | 0.0000 | 0.0000 | 0.0000 | 0.0000 | 0.0000 | 0.0018 | 0.0000 |
| Bar flow length (mm) | | 302 | 348 | 350 | 368 | 352 | 365 | 354 | 356 | 354 | 344 | 349 |
| Unnotched Charpy impact strenath(kJ/$m^2$) | | 232 | 212 | 218 | 221 | 215 | 225 | 238 | 235 | 237 | 238 | 234 |
| Bending strength (MPa) | | 96 | 91 | 92 | 92 | 91 | 92 | 95 | 94 | 96 | 95 | 94 |

[Table 4]

| | | Comparative Example | | | |
|---|---|---|---|---|---|
| | | 1 | 2 | 3 | 4 |
| PC resin (A) | A1 | 84.0 | 84.1 | 84.1 | 84.1 |
| | A2 | 16.0 | 15.9 | 15.9 | 15.9 |
| | A3 | | | | |
| | A4 | | | | |
| Phosphate (B) | B1 | | | 0.3200 | 0.3200 |
| Fibrous filler (C) | C1 | 9.91 | 9.91 | 9.91 | 9.91 |
| | C2 | 1.24 | 1.24 | 1.24 | 1.24 |
| | C3 | | | | |
| | C4 | | | | |
| | C5 | | | | |
| Other fillers | CX1 | | | | |
| | CX2 | | | | |
| Styrenic resin | D1 | | | | |
| PC oligomer | D2 | | 12.38 | 12.38 | 12.38 |
| Mold-release agent | E1 | 0.62 | 0.62 | 0.62 | 0.62 |
| CB-MB | F1 | 0.62 | 0.62 | 0.62 | 0.62 |
| Content in resin composition as amount relative to 100 mass parts of PC(A) | | | | | |
| 2,4-di-tert-butylphenol | G1 | 0.0000 | 0.0000 | 0.3300 | 0.0110 |
| 2,2-bis(4-hydroxyphenyl)propane | G2 | 0.0004 | 0.0004 | 0.0004 | 0.0004 |
| 4-tert-butylphenol | G3 | 0.0010 | 0.0010 | 0.0010 | 0.0010 |
| Cumylphenol | G4 | 0.0000 | 0.0000 | 0.0000 | 0.0000 |
| Bar flow length (mm) | | 305 | 354 | 352 | 362 |
| Unnotched Charpy impact strength($kJ/m^2$) | | 198 | 205 | 189 | 195 |
| Bending strength (MPa) | | 88 | 85 | 85 | 86 |

[Table 5]

| | | Example | | | | |
|---|---|---|---|---|---|---|
| | | 12 | 13 | 14 | 15 | 16 |
| PC resin (A) | A1 | 76.2 | 76.2 | 27.0 | 35.4 | 35.4 |
| | A2 | 23.8 | 23.8 | 29.8 | 21.4 | 21.4 |
| | A3 | | | 43.2 | | |
| | A4 | | | | 43.2 | 43.2 |
| Phosphate (B) | B1 | 0.0290 | 0.0290 | 0.0165 | 0.0113 | 0.0110 |
| Fibrous filler (C) | C1 | 7.25 | 7.25 | 7.25 | 7.25 | |
| | C2 | 21.74 | 21.74 | 21.74 | 21.74 | |
| | C3 | | | | | 21.74 |
| | C4 | | | | | |
| | C5 | | | | | |

(continued)

| | | Example | | | | |
|---|---|---|---|---|---|---|
| | | 12 | 13 | 14 | 15 | 16 |
| Other fillers | CX1 | | | | | |
| | CX2 | | | | | 7.25 |
| Styrenic resin | D1 | | | | | 14.49 |
| PC oligomer | D2 | | 14.49 | 14.49 | 14.49 | 14.49 |
| Mold-release agent | E1 | 0.62 | 0.62 | 0.62 | 0.62 | 0.62 |
| CB-MB | F1 | 0.62 | 0.62 | 0.62 | 0.62 | 0.62 |
| Content in resin composition as amount relative to 100 mass parts of PC(A) | | | | | | |
| 2,4-di-tert-butylphenol | G1 | 0.0014 | 0.0014 | 0.0013 | 0.0015 | 0.0120 |
| 2,2-bis(4-hydroxyphenyl)propane | G2 | 0.0004 | 0.0004 | 0.0004 | 0.0004 | 0.0004 |
| 4-tert-butylphenol | G3 | 0.0010 | 0.0010 | 0.0010 | 0.0010 | 0.0010 |
| Cumylphenol | G4 | 0.0000 | 0.0000 | 0.0000 | 0.0000 | 0.0000 |
| Bar flow length (mm) | | 260 | 299 | 297 | 283 | 361 |
| Unnotched Charpy impact strength(kJ/$m^2$) | | 58 | 54 | 52 | 51 | 51 |
| Bending strength (MPa) | | 157 | 155 | 150 | 150 | 173 |

[Table 6]

| | | Comparative Example | | | | | | |
|---|---|---|---|---|---|---|---|---|
| | | 5 | 6 | 7 | 8 | 9 | 10 | 11 |
| PC resin (A) | A1 | 76.2 | 76.2 | 76.2 | 76.2 | 35.4 | 76.2 | 35.4 |
| | A2 | 23.8 | 23.8 | 23.8 | 23.8 | 21.4 | 23.8 | 21.4 |
| | A3 | | | | | | | |
| | A4 | | | | | 43.2 | | 43.2 |
| Phosphate (B) | B1 | | | 0.3200 | | 0.0200 | | 0.0180 |
| Fibrous filler (C) | C1 | 7.25 | 7.25 | 7.25 | | | | |
| | C2 | 21.74 | 21.74 | 21.74 | | | | |
| | C3 | | | | | | | |
| | C4 | | | | | | | |
| | C5 | | | | | | | |
| Other fillers | CX1 | | | | 25.32 | 25.32 | | |
| | CX2 | | | | | | 25.32 | 25.32 |
| Styrenic resin | D1 | | | | | | | |
| PC oligomer | D2 | | 14.49 | 14.49 | | | 23.81 | |
| Mold-release agent | E1 | 0.62 | 0.62 | 0.62 | 0.62 | 0.62 | 0.62 | 0.62 |
| CB-MB | F1 | 0.62 | 0.62 | 0.62 | 0.62 | 0.62 | 0.62 | 0.62 |
| Content in resin composition as amount relative to 100 mass parts of PC(A) | | | | | | | | |
| 2,4-di-tert-butylphenol | G1 | 0.0000 | 0.0000 | 0.3300 | 0.0000 | 0.0010 | 0.0000 | 0.0010 |
| 2,2-bis(4-hydroxyphenyl)propane | G2 | 0.0004 | 0.0004 | 0.0004 | 0.0004 | 0.0004 | 0.0004 | 0.0004 |

(continued)

| Content in resin composition as amount relative to 100 mass parts of PC(A) | | | | | | | | |
|---|---|---|---|---|---|---|---|---|
| 4-tert-butylphenol | G3 | 0.0010 | 0.0010 | 0.0010 | 0.0010 | 0.0010 | 0.0010 | 0.0010 |
| Cumylphenol | G4 | 0.0000 | 0.0000 | 0.0000 | 0.0000 | 0.0000 | 0.0000 | 0.0000 |
| Bar flow length (mm) | | 260 | 283 | 321 | 236 | 236 | 261 | 247 |
| Unnotched Charpy impact strength(kJ/$m^2$) | | 47 | 45 | 43 | 46 | 47 | 43 | 42 |
| Bending strength (MPa) | | 147 | 144 | 143 | 118 | 120 | 140 | 142 |

[Table 7]

| | | Example | | | | | | Comparative Example | | | |
|---|---|---|---|---|---|---|---|---|---|---|---|
| | | 17 | 18 | 19 | 20 | 21 | 22 | 12 | 13 | 14 | 15 |
| PC resin (A) | A1 | 97.9 | 97.9 | 97.9 | 97.9 | 97.9 | 56.3 | 97.9 | 97.9 | 97.9 | 97.9 |
| | A2 | 2.1 | 2.1 | 2.1 | 2.1 | 2.1 | 5.3 | 2.1 | 2.1 | 2.1 | 2.1 |
| | A3 | | | | | | 38.4 | | | | |
| | A4 | | | | | | | | | | |
| Phosphate (B) | B1 | 0.0385 | 0.0420 | 0.0248 | 0.0248 | 0.0248 | 0.0204 | | | 0.3100 | 0.3400 |
| Fibrous filler (C) | C1 | 9.62 | 9.62 | 9.62 | 9.62 | 9.62 | 9.62 | 9.62 | 9.62 | 9.62 | 9.62 |
| | C2 | 67.31 | 67.31 | 67.31 | 67.31 | 67.31 | 67.31 | 67.31 | 67.31 | 67.31 | 67.31 |
| | C3 | | | | | | | | | | |
| | C4 | | | | | | | | | | |
| | C5 | | | | | | | | | | |
| Other fillers | CX1 | | | | | | | | | | |
| | CX2 | | | | | | | | | | |
| Styrenic resin | D1 | | | | | | | | | | |
| PC oligomer | D2 | | 9.62 | 9.62 | 9.62 | 9.62 | 9.62 | | 9.62 | 9.62 | 9.62 |
| Mold-release agent | E1 | 0.62 | 0.62 | 0.62 | 0.62 | 0.62 | 0.62 | 0.62 | 0.62 | 0.62 | 0.62 |
| CB-MB | F1 | 0.62 | 0.62 | 0.62 | 0.62 | 0.62 | 0.62 | 0.62 | 0.62 | 0.62 | 0.62 |
| Content in resin composition as amount relative to 100 mass parts of PC(A) | | | | | | | | | | | |
| 2,4-di-tert-butylphenol | G1 | 0.0019 | 0.0020 | 0.0010 | 0.0010 | 0.0010 | 0.0018 | 0.0000 | 0.0000 | 0.3400 | 0.0100 |
| 2,2-bis(4-hydroxyphenyl)propane | G2 | 0.0004 | 0.0004 | 0.0140 | 0.0004 | 0.0004 | 0.0004 | 0.0004 | 0.0004 | 0.0140 | 0.0004 |
| 4-tert-butylphenol | G3 | 0.0010 | 0.0010 | 0.0010 | 0.0020 | 0.0010 | 0.0010 | 0.0010 | 0.0010 | 0.0010 | 0.0025 |
| Cumylphenol | G4 | 0.0000 | 0.0000 | 0.0000 | 0.0000 | 0.0018 | 0.0000 | 0.0000 | 0.0000 | 0.0000 | 0.0000 |
| Bar flow length (mm) | | 160 | 210 | 213 | 212 | 211 | 207 | 160 | 208 | 212 | 224 |
| Unnotched Charpy impact strength($kJ/m^2$) | | 60 | 58 | 54 | 55 | 53 | 51 | 42 | 49 | 45 | 44 |
| Bending strength (MPa) | | 238 | 230 | 220 | 225 | 224 | 218 | 208 | 213 | 205 | 212 |

[Table 8]

| | | Example | | | | | | | | | |
|---|---|---|---|---|---|---|---|---|---|---|---|
| | | 23 | 24 | 25 | 26 | 27 | 28 | 29 | 30 | 31 | 32 |
| PC resin (A) | A1 | 97.3 | 97.3 | 97.3 | 97.3 | 97.3 | 97.3 | 97.3 | 97.3 | 59.2 | 27.3 |
| | A2 | 2.7 | 2.7 | 2.7 | 2.7 | 2.7 | 2.7 | 2.7 | 2.7 | 5.7 | 8.2 |
| | A3 | | | | | | | | | 35.1 | |
| | A4 | | | | | | | | | | 64.5 |
| Phosphate (B) | B1 | 0.0390 | 0.0180 | 0.0240 | 0.0450 | 0.0390 | 0.0248 | 0.0248 | 0.0248 | 0.0204 | 0.0188 |
| Fibrous filler (C) | C1 | | | | | | | | | | |
| | C2 | | | | | | | | | | |
| | C3 | | | | | | | | | | |
| | C4 | 43.86 | 43.86 | 43.86 | 43.86 | 43.86 | 43.86 | 43.86 | 43.86 | 43.86 | 43.48 |
| | C5 | 8.77 | 8.77 | 8.77 | 8.77 | 8.77 | 8.77 | 8.77 | 8.77 | 8.77 | |
| Other fillers | CX1 | | | | | | | | | | |
| | CX2 | | | | | | | | | | |
| Styrenic resin | D1 | | 17.54 | 17.54 | 17.54 | 17.54 | 17.54 | 17.54 | 17.54 | 17.54 | |
| PC oligomer | D2 | | | | | | | | | | |
| Mold-release agent | E1 | 0.88 | 0.88 | 0.88 | 0.88 | 0.88 | 0.88 | 0.88 | 0.88 | 0.88 | 0.88 |
| CB-MB | F1 | 4.39 | 4.39 | 4.39 | 4.39 | 4.39 | 4.39 | 4.39 | 4.39 | 4.39 | 4.39 |
| Content in resin composition as amount relative to 100 mass parts of PC(A) | | | | | | | | | | | |
| 2,4-di-tert-butylphenol | G1 | 0.0020 | 0.0000 | 0.0019 | 0.0110 | 0.0020 | 0.0010 | 0.0010 | 0.0010 | 0.0020 | 0.0025 |
| 2,2-bis(4-hydroxyphenyl)propane | G2 | 0.0004 | 0.0004 | 0.0004 | 0.0004 | 0.0004 | 0.0130 | 0.0004 | 0.0004 | 0.0004 | 0.0004 |
| 4-tert-butylphenol | G3 | 0.0010 | 0.0010 | 0.0010 | 0.0010 | 0.0010 | 0.0010 | 0.0020 | 0.0010 | 0.0010 | 0.0010 |
| Cumylphenol | G4 | 0.0000 | 0.0000 | 0.0000 | 0.0000 | 0.0000 | 0.0000 | 0.0000 | 0.0019 | 0.0000 | 0.0000 |
| Bar flow length (mm) | | 245 | 295 | 288 | 294 | 290 | 287 | 286 | 289 | 294 | 110 |
| Unnotched Charpy impact strength($kJ/m^2$) | | 30 | 33 | 34 | 30 | 32 | 33 | 34 | 32 | 30 | 48 |
| Bending strength (MPa) | | 262 | 258 | 258 | 261 | 257 | 260 | 258 | 257 | 260 | 224 |
| Tensile strength (MPa) | | 180 | 178 | 178 | 174 | 175 | 173 | 172 | 175 | 176 | 173 |

[Table 9]

| | | Comparative Example | | |
|---|---|---|---|---|
| | | 16 | 17 | 18 |
| PC resin (A) | A1 | 97.3 | 97.3 | 27.3 |
| | A2 | 2.7 | 2.7 | 72.7 |
| | A3 | | | |
| | A4 | | | |
| Phosphate (B) | B1 | | | |
| Fibrous filler (C) | C1 | | | |
| | C2 | | | |
| | C3 | | | |
| | C4 | 43.86 | 43.86 | 43.48 |
| | C5 | 8.77 | 8.77 | |
| Other fillers | CX1 | | | |
| | CX2 | | | |
| Styrenic resin | D1 | | 17.54 | |
| PC oligomer | D2 | | | |
| Mold-release agent | E1 | 0.88 | 0.88 | 0.88 |
| CB-MB | F1 | 4.39 | 4.39 | 4.39 |
| Content in resin composition as amount relative to 100 mass parts of PC(A) | | | | |
| 2,4-di-tert-butylphenol | G1 | 0.0000 | 0.0000 | 0.0025 |
| 2,2-bis(4-hydroxyphenyl)propane | G2 | 0.0004 | 0.0004 | 0.0004 |
| 4-tert-butylphenol | G3 | 0.0010 | 0.0010 | 0.0010 |
| Cumylphenol | G4 | 0.0000 | 0.0000 | 0.0000 |
| Bar flow length (mm) | | 243 | 292 | 110 |
| Unnotched Charpy impact strength(kJ/m$^2$) | | 28 | 32 | 48 |
| Bending strength (MPa) | | 253 | 253 | 224 |
| Tensile strength (MPa) | | 168 | 170 | 151 |

[Table 10]

| | | Example | | | | | |
|---|---|---|---|---|---|---|---|
| | | 33 | 34 | 35 | 36 | 37 | 38 |
| PC resin (A) | A1 | 31.1 | 31.1 | 31.1 | 74.3 | 31.1 | 31.1 |
| | A2 | 18.3 | 18.3 | 18.3 | 25.7 | 18.3 | 18.3 |
| | A3 | 50.6 | 50.6 | 50.6 | | 50.6 | 50.6 |
| Triaryl phosphate (B) | B1 | 0.0141 | 0.0143 | 0.0139 | 0.0139 | 0.0139 | 0.0139 |
| Fibrous filler (C) | C1 | 25.32 | | | 25.32 | | |
| | C2 | | 25.32 | | | | 12.66 |
| | C3 | | | 25.32 | | | |
| | C4 | | | | | 25.32 | 12.66 |
| | CX1 | | | | | | |

(continued)

| | | Example | | | | | |
|---|---|---|---|---|---|---|---|
| | | 33 | 34 | 35 | 36 | 37 | 38 |
| Other fillers | CX2 | | | | | | |
| | CX3 | | | | | | |
| Mold-release agent | E1 | 0.633 | 0.633 | 0.633 | 0.633 | 0.633 | 0.633 |
| CB | F1 | 0.633 | 0.633 | 0.633 | 0.633 | 0.633 | 0.633 |
| Content of phenolic structure compound in resin composition as amount relative to 100 mass parts of PC(A) | G1 | 0.0015 | 0.0017 | 0.0012 | 0.0000 | 0.0012 | 0.0012 |
| | G2 | 0.0004 | 0.0004 | 0.0005 | 0.0004 | 0.0005 | 0.0005 |
| | G3 | 0.0010 | 0.0012 | 0.0011 | 0.0010 | 0.0011 | 0.0011 |
| | G4 | 0.0000 | 0.0000 | 0.0000 | 0.0018 | 0.0000 | 0.0000 |
| Long side of (C) in pellet(μm) | | 73.3 | 277.5 | 301.1 | 75.2 | 501.3 | 400.2 |
| Short side of (C) in pellet(μm) | | 13.8 | 15.1 | 28.8 | 14.2 | 12.6 | 12.6 |
| Long side/short side ratio | | 5.3 | 18.4 | 10.5 | 5.3 | 39.8 | 31.8 |
| Bar flow length (mm) | | 196 | 202 | 215 | 196 | 182 | 199 |
| Unnotched Charpy impact strength(kJ/$m^2$) | | 151 | 57 | 65 | 153 | 70 | 68 |
| Bending strength (MPa) | | 90 | 166 | 178 | 92 | 190 | 185 |

[Table 11]

| | | Comparative Example | | | | | | | | |
|---|---|---|---|---|---|---|---|---|---|---|
| | | 19 | 20 | 21 | 22 | 23 | 24 | 25 | 26 | 27 |
| PC resin (A) | A1 | 74.3 | 74.3 | 74.3 | 74.3 | 31.1 | 74.3 | 31.1 | 74.3 | 31.1 |
| | A2 | 25.7 | 25.7 | 25.7 | 25.7 | 18.3 | 25.7 | 18.3 | 25.7 | 18.3 |
| | A3 | | | | | 50.6 | | 50.6 | | 50.6 |
| Triaryl phosphate (B) | B1 | | | | | 0.0141 | | 0.0165 | | 0.0148 |
| Fibrous filler (C) | C1 | 25.32 | | | | | | | | |
| | C2 | | 25.32 | | | | | | | |
| | C3 | | | 25.32 | | | | | | |
| | C4 | | | | | | | | | |
| | CX1 | | | | 25.32 | 25.32 | | | | |
| Other fillers | CX2 | | | | | | 25.32 | 25.32 | | |
| | CX3 | | | | | | | | 25.32 | 25.32 |
| Mold-release agent | E1 | 0.633 | 0.633 | 0.633 | 0.633 | 0.633 | 0.633 | 0.633 | 0.633 | 0.633 |
| CB | F1 | 0.633 | 0.633 | 0.633 | 0.633 | 0.633 | 0.633 | 0.633 | 0.633 | 0.633 |

(continued)

| | | Comparative Example | | | | | | | | |
|---|---|---|---|---|---|---|---|---|---|---|
| | | 19 | 20 | 21 | 22 | 23 | 24 | 25 | 26 | 27 |
| Content of phenolic structure compound in resin composition as amount relative to 100 mass parts of PC(A) | G1 | 0.0000 | 0.0000 | 0.0000 | 0.0000 | 0.0015 | 0.0000 | 0.0012 | 0.0000 | 0.0010 |
| | G2 | 0.0004 | 0.0006 | 0.0005 | 0.0004 | 0.0008 | 0.0006 | 0.0006 | 0.0004 | 0.0004 |
| | G3 | 0.0010 | 0.0012 | 0.0010 | 0.0014 | 0.0010 | 0.0012 | 0.0010 | 0.0010 | 0.0010 |
| | G4 | 0.0000 | 0.0000 | 0.0000 | 0.0000 | 0.0000 | 0.0000 | 0.0000 | 0.0000 | 0.0000 |
| Long side of (C) in pellet(μm) | | 92.7 | 283.0 | 281.3 | 129.3 | 115.8 | 43.8 | 44.2 | 21.4 | 22.9 |
| Short side of (C) in pellet(μm) | | 15.6 | 15.3 | 26.9 | 77.3 | 73.8 | 26.1 | 34.2 | 21.4 | 22.9 |
| Long side/short side ratio | | 6.0 | 18.5 | 10.5 | 1.7 | 1.6 | 1.7 | 1.3 | 1.0 | 1.0 |
| Bar flow length (mm) | | 200 | 205 | 214 | 219 | 222 | 250 | 239 | 211 | 190 |
| Unnotched Charpy impact strength($kJ/m^2$) | | 138 | 51 | 60 | 52 | 52 | 39 | 39 | 140 | 104 |
| Bending strength (MPa) | | 86 | 157 | 171 | 114 | 117 | 139 | 140 | 93 | 103 |

[Industrial Applicability]

The polycarbonate resin composition of the present invention has improved mechanical properties and is excellent in terms of bending strength and impact resistance and can be thus suitably used in a variety of molded articles.

[Reference Signs List]

1 Short side
2 Long side
3 short diameter

**Claims**

**1.** A polycarbonate resin composition comprising a polycarbonate resin (A) and, relative to 100 parts by mass of the polycarbonate resin (A), 0.0001 to 0.3 parts by mass of triaryl phosphate (B) represented by the following general formula (1), 1 to 100 parts by mass of a fibrous filler (C), and the following amount of at least one of the following (i) to (iv):

(i) 0.0005 to 0.1 parts by mass of 2-4-di-tert-butylphenol,
(ii) 0.0001 to 0.03 parts by mass of 2,2-bis(4-hydroxyphenyl)propane,
(iii) 0.0005 to 0.05 parts by mass of 4-tert-butylphenol, and
(iv) 0.001 to 0.05 parts by mass of cumylphenol.

[C1]

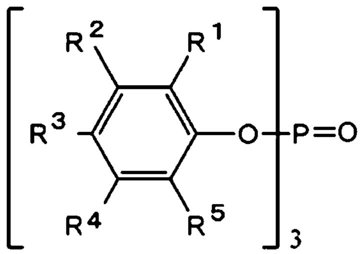

(1)

[In Formula (1), $R^1$ to $R^5$ are each independently a hydrogen atom or an alkyl group having 1 to 12 carbon atoms].

2. The polycarbonate resin composition of claim 1, wherein the fibrous filler (C) is a glass fiber, a carbon fiber, or a mixture thereof.

3. The polycarbonate resin composition of claim 2, wherein the glass fiber is at least one selected from the group consisting of a milled fiber, a chopped strand, and a flat glass fiber.

4. The polycarbonate resin composition of claim 1, wherein in Formula (1), at least one of $R^1$ to $R^5$ is an alkyl group having 1 to 12 carbon atoms.

5. The polycarbonate resin composition of any one of claims 1 or 4, wherein in Formula (1), $R^1$ and $R^3$ are alkyl groups having 1 to 12 carbon atoms, and $R^2$, $R^4$, and $R^5$ are hydrogen atoms.

6. The polycarbonate resin composition of claim 5, wherein in Formula (1), $R^1$ and $R^3$ are tert-butyl groups, and $R^2$, $R^4$, and $R^5$ are hydrogen atoms.

7. The polycarbonate resin composition of claim 1, further comprising 0.001 to 0.3 parts by mass of tris(2,4-di-tert-butylphenyl) phosphite relative to 100 parts by mass of the polycarbonate resin (A).

8. The polycarbonate resin composition of claim 1, wherein the polycarbonate resin (A) contains a recycled polycarbonate resin.

9. A pellet, comprising the polycarbonate resin composition of any one of claims 1 to 8.

10. The pellet of claim 9, wherein an average length of a long side of the fibrous filler (C) in the pellet is 50 μm or more, and a ratio of the average length of the long side to an average length of a short side is 5 or more.

11. A molded article, comprising the polycarbonate resin composition of any one of claims 1 to 8.

12. A molded article obtained by molding the pellet of claim 9.

[Fig. 1]

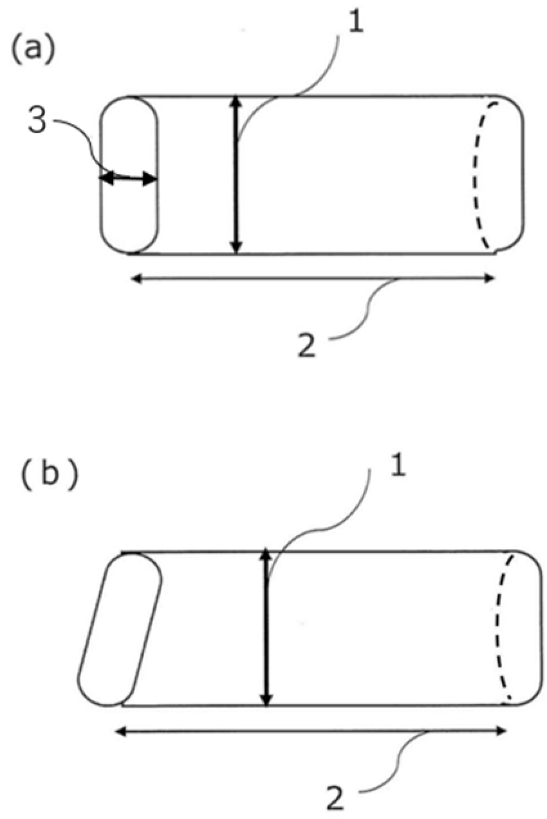

## INTERNATIONAL SEARCH REPORT

International application No.
**PCT/JP2024/029511**

**A. CLASSIFICATION OF SUBJECT MATTER**

***C08L 69/00***(2006.01)i; ***C08K 5/13***(2006.01)i; ***C08K 5/523***(2006.01)i; ***C08K 5/526***(2006.01)i; ***C08K 7/04***(2006.01)i
FI: C08L69/00; C08K5/523; C08K7/04; C08K5/526; C08K5/13

According to International Patent Classification (IPC) or to both national classification and IPC

**B. FIELDS SEARCHED**

Minimum documentation searched (classification system followed by classification symbols)

C08L69/00; C08K5/13; C08K5/523; C08K5/526; C08K7/02-7/14

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

CAplus/REGISTRY (STN)

**C. DOCUMENTS CONSIDERED TO BE RELEVANT**

| Category* | Citation of document, with indication, where appropriate, of the relevant passages | Relevant to claim No. |
|---|---|---|
| A | JP 7-247352 A (MITSUBISHI GAS CHEMICAL COMPANY, INC.) 26 September 1995 (1995-09-26) | 1-12 |
| A | CN 107936239 A (BEIJING PUYUAN INSTITUTE FOR ADVANCED MATERIALS AND TECHNOLOGY (GENERAL PARTNERSHIP)) 20 April 2018 (2018-04-20) | 1-12 |
| A | WO 2018/116607 A1 (MITSUBISHI ENGINEERING PLASTICS CORP.) 28 June 2018 (2018-06-28) | 1-12 |
| A | WO 2013/118624 A1 (IDEMITSU KOSAN CO., LTD.) 15 August 2013 (2013-08-15) | 1-12 |
| A | CN 113881210 A (WANHUA CHEMICAL GROUP CO., LTD.) 04 January 2022 (2022-01-04) | 1-12 |
| A | JP 2010-13649 A (CHEIL INDUSTRIES INC.) 21 January 2010 (2010-01-21) | 1-12 |
| A | JP 7-3140 A (SUMITOMO DOW LTD.) 06 January 1995 (1995-01-06) | 1-12 |

☑ Further documents are listed in the continuation of Box C. ☑ See patent family annex.

* Special categories of cited documents:
"A" document defining the general state of the art which is not considered to be of particular relevance
"D" document cited by the applicant in the international application
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **21 October 2024** | **05 November 2024** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | Telephone No. |

Form PCT/ISA/210 (second sheet) (July 2022)

**INTERNATIONAL SEARCH REPORT**

International application No.
**PCT/JP2024/029511**

**C. DOCUMENTS CONSIDERED TO BE RELEVANT**

| Category* | Citation of document, with indication, where appropriate, of the relevant passages | Relevant to claim No. |
|---|---|---|
| P, X | WO 2023/162460 A1 (MITSUBISHI ENGINEERING PLASTICS CORP.) 31 August 2023 (2023-08-31)<br>claims, paragraph [0073] | 1-12 |
| P, A | WO 2024/070533 A1 (MITSUBISHI ENGINEERING PLASTICS CORP.) 04 April 2024 (2024-04-04) | 1-12 |

Form PCT/ISA/210 (second sheet) (July 2022)

**INTERNATIONAL SEARCH REPORT**
**Information on patent family members**

International application No.
**PCT/JP2024/029511**

| Patent document cited in search report | Publication date (day/month/year) | Patent family member(s) | Publication date (day/month/year) |
|---|---|---|---|
| JP 7-247352 A | 26 September 1995 | (Family: none) | |
| CN 107936239 A | 20 April 2018 | CN 115160554 A | |
| WO 2018/116607 A1 | 28 June 2018 | US 2020/0071519 A1<br>EP 3556809 A1<br>CN 110088200 A | |
| WO 2013/118624 A1 | 15 August 2013 | JP 2013-159755 A<br>CN 104125985 A<br>KR 10-2014-0127208 A<br>TW 201335227 A | |
| CN 113881210 A | 04 January 2022 | (Family: none) | |
| JP 2010-13649 A | 21 January 2010 | US 2010/0004364 A1<br>EP 2143754 A1<br>KR 10-2010-0004848 A<br>CN 101619142 A<br>TW 201002730 A | |
| JP 7-3140 A | 06 January 1995 | (Family: none) | |
| WO 2023/162460 A1 | 31 August 2023 | (Family: none) | |
| WO 2024/070533 A1 | 04 April 2024 | JP 2024-49857 A | |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP H1060247 A